# EUROPÄISCHE PATENTSCHRIFT

(11) **EP 3 634 647 B1**
(45) Veröffentlichungstag und Bekanntmachung des Hinweises auf die Patenterteilung: **24.05.2023**
(21) Anmeldenummer: 18717577.3
(22) Anmeldetag: 10.04.2018
(51) Int. Cl.: B05C 3/10, G02B 1/10, B05C 3/09

(54) **GLASHALTER FÜR TAUCHLACKBESCHICHTUNG**
LENS HOLDER FOR DIP COATING
SUPPORT DE VERRE POUR APPLICATION D'UN REVÊTEMENT PAR IMMERSION

(30) Priorität: 08.06.2017 DE 102017005473
(43) Veröffentlichungstag der Anmeldung: 15.04.2020
(73) Patentinhaber: Rodenstock GmbH, 80687 München (DE)
(72) Erfinder: DORNER, Christian, 94227 Zwiesel (DE); EBNER, Alexander, 94250 Achslach (DE); SCHRETTLE, Florian, 94469 Deggendorf (DE)
(74) Vertreter: Müller-Boré & Partner Patentanwälte PartG mbB
(86) Internationale Anmeldenummer: PCT/EP2018/059127
(87) Internationale Veröffentlichungsnummer: WO 2018/224202

(56) Entgegenhaltungen:
- EP-A1- 1 914 579
- JP-A- 2003 071 650
- JP-A- 2003 236 447
- US-A1- 2013 242 418

## Beschreibung

Die vorliegende Erfindung betrifft eine insbesondere hinsichtlich einer erreichbaren optischen Lackschichtqualität verbesserte Glashaltevorrichtung zum Halten eines Linsenglases an dessen Rand, während einer Tauchlackbeschichtung in einem Tauchlackbad und ein Verfahren zum Tauchlackbeschichten eines Linsenglases in einem Tauchlackbad mittels einer solchen Glashaltevorrichtung. Einsetzbar ist die Erfindung für Linsengläser, insbesondere für Brillengläser.

Um Linsengläser, insbesondere Brillengläser zu beschichten sind Tauchlackbeschichtungen sehr verbreitet. Während einer Tauchlackbeschichtung wird ein Linsenglas in eine flüssige Tauchlacklösung beziehungsweise ein Tauchlackbad ein- und ausgetaucht, wodurch das Linsenglas von der Tauchlacklösung benetzt wird. Anschließend wird die flüssige Lackschicht des Linsenglases einem Trocknungs- oder Härtungsprozess unterzogen, wodurch eine feste Lackschicht an der Oberfläche des Linsenglases entsteht. Hierdurch können Linsengläser mit einer funktionalen Schicht, wie zum Beispiel mit einer harten Schutzschicht, einer Färbungsschicht und/oder eine Verspiegelungs- oder Entspiegelungsschicht, versehen werden.

Aufgrund der Verwendung der Linsengläser als optische Elemente ist es wichtig, eine möglichst homogene und defektfreie Lackschicht zu gewährleisten. Defekte in der Lackschicht können zum Beispiel durch die Handhabung des Linsenglases während und nach einer Tauchlackbeschichtung auftreten, und einen negativen Einfluss auf die optischen Eigenschaften des Linsenglases haben. Daher ist es eine übliche Praxis geworden, ein Linsenglas vor einer Tauchlackbeschichtung in einen Glashalter einzuspannen, wodurch eine weitere Handhabung des Linsenglases insbesondere während und nach einer Tauchlackbeschichtung möglich ist, wobei das Linsenglas nur an wenigen Haltepunkten vorzugsweise am Rand oder in der Nähe des Randes gehalten wird. Dadurch können Defekte in der Lackschicht zumindest im optisch relevanten Bereich des Linsenglases vermieden oder reduziert werden. Dabei meint der optisch relevante Bereich im Sinne der Erfindung, denjenigen Bereich des Linsenglases, der zum Einbetten in die Brillenfassung erhalten bleiben soll. Insbesondere kann der optisch relevante Bereich eine in internen Normen der Glashersteller definierte defektfreie Zone aufweisen.

Über die punktuelle Defektfreiheit hinaus stellt auch die Homogenität der Lackschicht ein wichtiges Qualitätskriterium dar. Der erfindungsgemäße Glashalter kann dabei auch dazu verwendet werden, um insbesondere mittels einer entsprechenden Tauchvorrichtung automatisiert und insbesondere mit möglichst kontrollierter und reproduzierbarer (z.B. konstanter) Geschwindigkeit in das Tauchbad eingetaucht und aus dem Tauchbad wieder ausgetaucht zu werden.

JP 2003 236447 A beschreibt eine Haltevorrichtung zum Halten einer Vielzahl von Linsen zum Tauchbeschichten. Dabei werden nebeneinander zwei Reihen mit jeweils einer Vielzahl von hintereinander angeordneten Linsen gehalten. Jede Linse wird von zwei seitlichen Blattfederelementen gehalten, welche an ihrem oberen Ende mit einer gemeinsamen, im Wesentlichen quaderförmigen Rahmenkonstruktion verbunden sind. Unten werden die Linsen innerhalb jeder der beiden Reihen von einer gemeinsamen Rahmenschiene gestützt.

US 2013/0242418 A1 offenbart eine Haltevorrichtung zum Halten einer Linse zum Tauchbeschichten. Dabei umfasst ein im Wesentlichen starrer Körper einen seitlichen Bügel, der ein unteres Linsenhalteelement mit einem am oberen Ende vorgesehenen Haken zum Aufhängen und Manipulieren der Haltevorrichtung verbindet. Ebenfalls am oberen Ende des Körpers sind zwei seitliche Federarme befestigt, an deren unteren Enden seitliche Linsenhalteelemente angeordnet sind.

JP 2003 071650 A beschreibt eine Haltevorrichtung zum Halten einer Linse zum Tauchbeschichten. Dabei sind zwei seitliche Haltebügel an deren oberen Ende überkreuzt und mittels einer Schraubenfeder elastisch miteinander verbunden. Einer der beiden Haltebügel erstreckt sich bis zu einer seitlichen Position der zu haltenden Linse. Dort ist ein entsprechendes seitliches Linsenhalteelement angeordnet. Auf der anderen Seite der zu haltenden Linse ist am zweiten Haltebügel ein weites seitliches Linsenhaltelemente angeordnet. Dabei erstreckt sich der zweite Haltebügel noch weiter nach unten, wo ein unteres Linsenhalteelement angeordnet ist.

Die Aufgabe der vorliegenden Erfindung besteht darin, eine verbesserte optische Lackschichtqualität eines Linsenglases bereitzustellen. Diese Aufgabe wird mit einer Glashaltevorrichtung mit den in Anspruch 1 angegebenen Merkmalen, mit einem Glashaltersatz mit den in Anspruch 11 angegebenen Merkmalen und mit einem Verfahren zum Tauchlackbeschichten mit den in Anspruch 12 angegebenen Merkmalen gelöst. Bevorzugte Ausführungsformen sind Gegenstand der abhängigen Ansprüche.

Somit bietet die Erfindung in einem Aspekt eine Glashaltevorrichtung zum Halten eines Linsenglases an dessen Rand, während einer Tauchlackbeschichtung in einem Tauchlackbad. Dabei umfasst die Glashaltevorrichtung eine erste elastische Glashalteeinrichtung mit einem ersten Glasrandhalteelement, zu einem Halten des Linsenglases an einem Rand des Linsenglases, an einer ersten Randseite, während der Tauchlackbeschichtung. Außerdem umfasst die Glashaltevorrichtung eine zweite elastische Glashalteeinrichtung mit einem zweiten Glasrandhalteelement, zum Halten des Linsenglases an dem Rand des Linsenglases, an einer zweiten Randseite, während der Tauchlackbeschichtung. Dabei sind die erste Randseite und die zweite Randseite jeweils an einer linken Seite beziehungsweise an einer rechten Seite des Randes des Linsenglases angeordnet.

Schließlich umfasst die Glashaltevorrichtung einen zumindest teilweise umlaufenden Rahmen, mit einem dritten Glasrandhalteelement, zum Halten des Linsenglases an dem Rand des Linsenglases, an einer dritten Randseite, während der Tauchlackbeschichtung, wobei die dritte Randseite an einer unteren Seite des Randes des Linsenglases angeordnet ist, und wobei der zumindest teilweise umlaufende Rahmen einen ersten und einen zweiten seitlichen Rahmenabschnitt insbesondere mit einem ersten Abstand zwischen dem ersten Glasrandhalteelement und dem ersten seitlichen Rahmenabschnitt und einem zweiten Abstand zwischen dem zweiten Glasrandhalteelement und dem zweiten seitlichen Rahmenabschnitt derart aufweist, dass dadurch jeweils vom ersten beziehungsweise zweiten Glasrandhalteelement bei einem Anheben der Glashaltevorrichtung aus dem Tauchlackbad an der Oberfläche des Tauchlackbades verursachte Wellen gedämpft werden. Insbesondere wird durch die Dämpfung der Wellen an der Oberfläche des Tauchlackbades eine Homogenität der Lackschicht erhöht, wodurch die optische Qualität der Lackschicht verbessert wird.

So wurde im Rahmen der vorliegenden Erfindung erkannt, dass Wellen an der Oberfläche des Tauchlackbades eine ungleichmäßige Beschichtung der Linsengläser verursachen können. Vor allem hat sich herausgestellt, dass solche Wellen während des Austauchens des Linsenglases aus dem Tauchlackbad dazu führen können, dass lokal entweder mehr Tauchlack von dem Linsenglas abgezogen wird oder mehr Tauchlack auf das Linsenglas aufgetragen wird. Insbesondere wurde erkannt, dass selbst kleine Wellen, welche beim Austauchen insbesondere von seitlichen Glasrandhalteelementen aus dem Tauchlackbad verursacht werden können, die optische Qualität der Lackschicht begrenzen können. Andererseits haben die Erfinder aber erkannt, dass seitliche Rahmenabschnitte sehr effizient dazu genutzt werden können, solche Wellen an der Oberfläche des Tauchlackbades zu dämpfen, und dass dies die resultierende optische Qualität der Lackschicht merklich beeinflusst.

Die erste und zweite elastische Glashalteeinrichtung erlauben ein Ein- und Ausspannen des Linsenglases in der Glashaltevorrichtung, wobei das Linsenglas jeweils aus Richtung der linken und rechten Seite gehalten wird. Dabei sind die erste und zweite elastische Glashalteeinrichtung derart ausgebildet, dass eine untere Seite, insbesondere ein unterer oder unterster Punkt, des gehaltenen Linsenglases im Wesentlichen durch das dritte Glasrandhalteelement gehalten wird. Die untere Seite, insbesondere der untere oder unterste Punkt, des gehaltenen Linsenglases ist in diesem Sinne die Seite bzw. der Punkt des Linsenglases, die bzw. der bei einem Austauchen als letzte Seite bzw. als letzter Punkt des Linsenglases aus der Tauchlacklösung austaucht. Unter im Wesentlichen sind im diesen Sinne herkömmliche herstellungs- und benutzungsbedingte Abweichungen zu verstehen. Hierdurch wird insbesondere sichergestellt, dass abfließende Tauchlacklösung durch das dritte Glasrandhalteelement von dem Linsenglas abgeführt werden kann. In Fällen, in denen die Tauchlacklösung nicht von dem Linsenglas abgeführt wird, kann dies zu einer Ansammlung der Tauchlacklösung an der unteren Seite des Linsenglases führen, wodurch ein Lackwulst entsteht.

Das Linsenglas wird in der Glashaltevorrichtung von der ersten und zweiten Glashalteeinrichtung mit jeweils dem ersten und zweiten Glasrandhalteelement, und dem dritten Glasrandhalteelement gehalten. Die Glasrandhalteelemente können dabei derart ausgelegt sein, dass eine Berührungsfläche zwischen Glasrandhalteelement und dem Linsenglas minimiert wird, da eine solche Berührungsfläche die zu bildende Lackschicht in einem Bereich der Berührungsfläche beeinträchtigt. Insbesondere können die Glasrandhalteelemente ausgebildet sein, das Linsenglas nur entlang des Glasrandes zu berühren, um somit eine optisch relevante Vorder- und Rückfläche des Linsenglases nicht zu beeinträchtigen. In einer bevorzugten Ausführungsform ist die Berührungsfläche der Glasrandhalteelemente, die mit dem eingespannten Linsenglas in Kontakt steht V-förmig ausgebildet, um eine Zentrierung des eingespannten Linsenglases in der Glashaltevorrichtung zu gewährleisten. In einer weiter bevorzugten Ausführungsform ist die V-förmige Berührungsfläche der Glasrandhalteelemente stufenartig ausgebildet, um einen besseren Halt des Linsenglases zu ermöglichen und ein Verrutschen des Linsenglases innerhalb der Glashaltevorrichtung zu vermeiden.

Das erste, zweite und dritte Glasrandhalteelemente kann jeweils entweder einstückig mit der ersten und zweiten Glashalteeinrichtung und der dritten Randseite ausgebildet sein, oder an jeweils diesen, zum Beispiel durch Laserschweißen, befestigt sein.

Der zumindest teilweise umlaufende Rahmen liegt dabei parallel zur Hauptebene des Linsenglases, vorzugsweise in der Hauptebene des Linsenglases. Hierdurch kann die Stabilität des Glashalters erhöht werden.

In einer weiteren Ausführungsform umläuft der Rahmen das Linsenglas parallel zu einer Ebene, die durch den Rand des Linsenglases definiert ist. Hierdurch wird es möglich, das Linsenglas entlang einer optischen Achse des Linsenglases zu betrachten, ohne dass der Rahmen vor oder hinter dem Linsenglas verläuft. Dies ermöglicht eine Inspektion des Linsenglases vor und nach der Tauchlackbeschichtung, wodurch Defekte in der Lackschicht frühstmöglich entdeckt und korrigiert werden können, insbesondere ohne dass das Linsenglas dazu aus der Glashaltevorrichtung entnommen werden muss.

Das dritte Glasrandhalteelement ist an dem Rahmen in einem unteren Rahmenabschnitt angeordnet. In einer Ausführungsform ist der dritte Rahmenabschnitt flächig ausgebildet. Die Oberfläche des unteren Rahmenabschnitts unterstützt aufgrund der Oberflächenspannung der Tauchlacklösung einen bestmöglichen Abfluss der Tauchlacklösung von dem Linsenglas und trägt zur Dämpfung von Wellen auf der Oberfläche der Tauchlacklösung bei.

Der erste und zweite seitliche Rahmenabschnitt sind ausgebildet, Wellen auf der Oberfläche der Tauchlacklösung zu dämpfen, die durch das Austauchen des ersten beziehungsweise zweiten Glasrandhalteelements verursacht werden. Diese Wellen können, wie oben bereits angeführt, zu Inhomogenitäten in der Lackschicht des Linsenglases, oder den Lackschichten benachbarter Linsengläser, welche parallel tauchlackiert werden, führen. Dieser Dämpfungseffekt entsteht aufgrund der Oberfläche des ersten und zweiten Rahmenabschnitts während des Austauchens, und ermöglicht daher eine homogene Lackbeschichtung des Linsenglases. In einer weiteren Ausführungsform stellen der erste und zweite Rahmenabschnitt jeweils einen Dämpfungsabschnitt mit vergrößerter Oberfläche bzw. erhöhter Dämpfungswirkung dar.

In einer weiteren Ausführungsform sind die erste und zweite elastische Glashalteeinrichtung gemeinsam dazu ausgelegt, Linsengläser unterschiedlicher Größe zu halten, während der zumindest teilweise umlaufende Rahmen bei einer Montage von Linsengläsern unterschiedlicher Größe unverändert bleibt. Ein derart starrer oder formstabiler Rahmen ermöglicht eine einfache maschinelle bzw. automatisierte Handhabung der Glashaltevorrichtung, z.B. bei Bestückung, Tauchvorgang, Kontrolle und/oder Weiterverarbeitung unabhängig von der jeweiligen Größe des Linsenglases.

In einer weiteren Ausführungsform sind die erste bzw. die zweite elastische Glashalteeinrichtung mit dem jeweils ersten oder zweiten Glasrandhalteelement so ausgebildet, dass das Linsenglas während des Austauchens aus dem Tauchlackbad von der Glashaltevorrichtung derart senkrecht gehalten wird, dass sich ein erster und ein zweiter seitlicher Haltepunkt, an dem das Linsenglas vom ersten beziehungsweise zweiten Glasrandhalteelement gehalten wird, jeweils in einer Höhe im Bereich des etwa 0,4 bis 0,6-fachen, vorzugsweise im Bereich des etwa 0,45 bis 0,55-fachen eines Durchmessers des Linsenglases oberhalb des unteren Haltepunktes befinden. Die Höhe wird in diesem Sinne insbesondere entlang einer Achse gemessen, die durch den untersten Punkt, welcher bei einem Austauchen als letzter Punkt des Linsenglases aus der Tauchlacklösung austaucht, und entlang einer Austauchrichtung verläuft. Durch eine solche Ausbildung der ersten und zweiten elastischen Glashalteeinrichtung wird ein besonders sicherer Sitz des Linsenglases gewährleistet. Außerdem liegen die Haltepunkte damit lateral möglichst weit außen, was einen Einfluss von Wellen, die beim Austauchen der Glasrandhalteelemente entstehen können, auf die Qualität der Lackschicht reduziert. Zudem können damit solche Wellen besonders effizient durch die seitlichen Rahmenabschnitte gedämpft werden.

Erfindungsgemäß beträgt ein erster Abstand zwischen dem ersten Glasrandhalteelement und dem ersten seitlichen Rahmenabschnitt und ein zweiter Abstand zwischen dem zweiten Glasrandhalteelement und dem zweiten seitlichen Rahmenabschnitt insbesondere während des Haltens eines Linsenglases nicht mehr als 22 mm, vorzugsweise nicht mehr als etwa 10mm, noch mehr bevorzugt nicht mehr als etwa 5mm, am meisten bevorzugt nicht mehr als etwa 2mm. Ein solcher Abstand gewährleistet einen signifikanten vorteilhaften Dämpfungseffekt des ersten und zweiten Rahmenabschnitts, wobei der Dämpfungseffekt mit einem größeren ersten bzw. zweiten Abstand abnimmt.

In einer weiteren Ausführungsform der Glashaltevorrichtung ist die erste und zweite elastische Glashalteeinrichtung jeweils an einem oberen Rahmenabschnitt des Rahmens befestigt. Hierdurch wird ein Ablaufen der Tauchlacklösung in eine Richtung entgegen einer Austauchrichtung vereinfacht. Zudem wird eine Webbing-Bildung an der ersten bzw. zweiten Glashalteeinrichtung erschwert und/oder verhindert. So wurde im Rahmen der vorliegenden Erfindung erkannt, dass weitere Grenzen der Lackschichtqualität durch "Webbing"-Effekte hervorgerufen werden können. Hierbei handelt es sich um die Bildung eines dünnen Lackfilms oder einer dünnen Lackhaut aus flüssiger Tauchlacklösung, der insbesondere komplett umschlossene Flächen des Glashalter einschließlich des Linsenglases während des Austauchens überspannt. Die Tauchlacklösung dieser Lackfilme fließt weiterhin ab, bis der Lackfilm instabil wird und reißt. Hierdurch können Lackspritzer oder Wellen in der Tauchlacklösung entstehen, welche zu Lackschichtdefekten auf den Linsengläsern führen können. Die Lackspritzer und/oder Wellen auf der Tauchlacklösung können zudem zu Lackschichtdefekten auf benachbarten Linsengläsern führen, welche parallel tauchlackiert werden. Daher ist es von Vorteil, einen Glashalter bereitzustellen, der die Bildung von Webbing-Filmen verhindert oder deren beeinträchtigende Effekte begrenzt.

Vorzugsweise ist die erste und zweite elastische Glashalteeinrichtung jeweils derart in einem entsprechenden Befestigungsabschnitt am Rahmen befestigt, dass die Glashaltevorrichtung dazu eingerichtet ist, ein von der Glashaltevorrichtung gehaltenes Linsenglas derart vollständig in ein Tauchbad einzutauchen, dass der Befestigungsabschnitt außerhalb des Tauchbades verbleibt oder verbleiben kann.

Vorzugsweise ist die Glashaltevorrichtung derart ausgelegt, dass der obere Rahmenabschnitt nicht in das Tauchbad eintaucht.

Durch ein vermiedenes Eintauchen der Befestigungsabschnitte in das Tauchbad kann ein Ausbilden einer Lackhaut und daher das Auftreten von Webbing-Effekten verhindert werden. Außerdem kann der Befestigungsabschnitt eine Oberfläche aufweisen, an der sich Schmutz sammeln kann. Soweit dieser Befestigungsabschnitt nicht in das Tauchbad eingetaucht wird, kann hierdurch eine Verunreinigung der Tauchlacklösung vermieden werden.

In einer weiteren Ausführungsform sind das erste und zweite Glasrandhalteelement, insbesondere die erste und zweite elastische Glashalteeinrichtung, und/oder der erste und zweite seitliche Rahmenabschnitt symmetrisch bezüglich einer Vertikalebene der Glashaltevorrichtung angeordnet. Eine Vertikalebene in diesem Sinn ist insbesondere eine Ebene, deren Normalenvektor senkrecht zu einem Normalenvektor einer Ebene, die durch die seitlichen Rahmenabschnitte definiert ist, und senkrecht zu einem Normalenvektor einer Ebene, die durch die Oberfläche der Tauchlacklösung definiert ist, verläuft. Durch eine solche symmetrische Anordnung der Glasrandhalteelemente beziehungsweise der elastischen Glashalteeinrichtungen und/oder der seitlichen Rahmenabschnitte werden Wellen, die an der Oberfläche der Tauchlacklösung entstehen, symmetrisch durch die Glasrandhalteelemente bzw. die elastischen Glashalteeinrichtungen und/oder die seitlichen Rahmenabschnitte gedämpft. Hierdurch wird eine uneinheitliche Dämpfung dieser Wellen vermieden, wodurch eine homogene Lackbeschichtung des Linsenglases ermöglicht wird.

In einer bevorzugten Ausführungsform erstreckt sich der erste und/oder zweite Rahmenabschnitt während eines Austauchens im Wesentlichen senkrecht zur Oberfläche des Tauchlackbades. In anderen Worten verläuft der erste und/oder zweite Rahmenabschnitt vorzugsweise parallel zu einer Vertikalachse der Glashaltevorrichtung. Im "Wesentlichen" bedeutet in diesem Sinne insbesondere, dass ein Winkel zwischen einer Achse des ersten beziehungsweise zweiten Rahmenabschnitts (oder der Vertikalachse der Glashaltevorrichtung) und dem Normalenvektor der Ebene, die durch die Oberfläche der Tauchlacklösung definiert ist, nicht größer als etwa 10°, bevorzugt nicht größer als etwa 5°, am meisten bevorzugt nicht größer als etwa 2° ist. Hierdurch wird bewirkt, dass beim Austauchen der Glashaltevorrichtung aus dem Tauchlackbad durch den ersten und/oder zweiten Rahmenabschnitt keine Bugwellen auf der Oberfläche des Tauchlackbades erzeugt werden, welche die Qualität der Lackbeschichtung des Linsenglases beeinträchtigen können.

In einer weiteren Ausführungsform spannt der Rahmen eine Rahmenebene auf, wobei sich das erste, das zweite und das dritte Glasrandhalteelement vorwiegend in einer gemeinsamen Richtung aus der Rahmenebene heraus erstrecken. Hierdurch wird erreicht, dass die Glashaltevorrichtung mit der dieser gemeinsamen Richtung entgegengesetzten Seite sehr gut auf einer planaren Fläche aufliegen kann und damit im Falle einer eventuellen Verformung der Glashaltevorrichtung sehr einfach wieder ausgerichtet werden kann. In einer bevorzugten Ausführungsform sind der Rahmen und alle Elemente der Glashaltevorrichtung, die von dem Rahmen zumindest teilweise bzw. komplett umlaufen werden, im Wesentlichen auf einer gemeinsamen Seite der Rahmenebene angeordnet. Im Wesentlichen bedeutet in diesem Sinne mit Ausnahme von minimalen Vorsprüngen, die für die Fabrikation der Glashaltevorrichtung notwendig sind, wie zum Beispiel für die Befestigung durch Laserschweißen der Glasrandhalteelemente an den elastischen Glashalteeinrichtungen.

In einer weiteren Ausführungsform umfasst die Glashaltevorrichtung ferner eine Befestigungseinrichtung zum Befestigen der Glashaltevorrichtung in einer Tauchlackbeschichtungsanlage zum Ein- und Austauchen der Glashaltevorrichtung während der Tauchlackbeschichtung. In einer bevorzugten Ausführungsform umfasst der Rahmen der Glashaltevorrichtung eine Befestigungseinrichtung zum magnetischen Befestigen der Glashaltevorrichtung in einer Tauchlackbeschichtungsanlage zum Ein- und Austauchen der Glashaltevorrichtung während der Tauchlackbeschichtung. Hierdurch ist eine flexible und variable Montage der Glashaltevorrichtung in der Tauchlackbeschichtungsanlage möglich, wobei ein Abstand zwischen benachbarten Glashaltevorrichtungen, die in der Tauchlackbeschichtungsanlage montiert sind, nicht fest vorgegeben wird. Stattdessen ist es möglich, den Abstand variabel zu wählen, zum Beispiel in Abhängigkeit von den jeweiligen Dicken und/oder Krümmungen der gehaltenen Linsengläser. Damit wird eine sehr effiziente Nutzung des verfügbaren Platzes bei gleichzeitiger Sicherung einer hohen Lackschichtqualität bei gleichzeitiger Beschichtung einer Vielzahl von Linsengläsern ermöglicht.

In einer weiteren Ausführungsform umfasst die Glashaltevorrichtung ferner eine Codiereinrichtung zum maschinenlesbaren Identifizieren der Glashaltevorrichtung, insbesondere in Form einer mechanisch und/oder optisch und/oder elektrisch und/oder elektromagnetisch lesbaren Markierung. Damit können beispielsweise Glashaltevorrichtungen für unterschiedliche Linsengrößen sehr einfach automatisch erkannt werden, was beispielsweise eine automatisierte Bestückung und Beschichtung wesentlich vereinfacht. Überdies ist es vorzugsweise sogar möglich, einzelne, individuelle Linsengläser, wie zum Beispiel Brillengläser, während eines Beschichtungsvorgangs und eventuell sogar einer Qualitätskontrolle vorzugsweise vollautomatisch eindeutig nachverfolgen zu können. Ferner es ist auch möglich, beispielsweise mittels RFID das beschichtete Glas eindeutig einer Transportschale und/oder einer Auftragsnummer zuzuordnen und/oder sogar vollautomatisch in die richtige Transportschale wieder hinein zu legen und/oder den Auftrag beziehungsweise die Auftragsnummer gemeinsam mit dem Glas einer beliebigen Transportschale erneut zuzuordnen.

In einer bevorzugten Ausführungsform sind das erste, zweite und/oder dritte Glasrandhalteelement mit einer Breite von zumindest etwa 10mm, vorzugsweise zumindest etwa 13 mm und einer Höhe im Bereich von etwa 7 mm bis 15 mm, vorzugsweise im Bereich von etwa 10 mm bis 12 mm, flächig ausgebildet. Aufgrund der großen Oberfläche der flächigen Glasrandhalteelemente wird vorteilhaft ein bestmögliches Abfließen der Tauchlacklösung über die Glasrandhalteelemente gewährleistet, wodurch die Bildung einer homogenen Lackschicht unterstützt wird. Ferner kann hierdurch auch die Bildung von Lackwulsten an dem Glasrand unterdrückt werden. Diese Breite erstreckt sich dabei vorzugsweise senkrecht zu einer Rahmenebene.

Ein weiterer Aspekt der Erfindung betrifft einen Glashaltersatz mit einer Vielzahl von erfindungsgemäßen Glashaltevorrichtungen, wobei die Rahmen der Vielzahl von Glashaltevorrichtungen des Glashaltersatzes übereinstimmen, während sich die ersten und zweiten elastischen Glashalteeinrichtungen der Vielzahl von Glashaltevorrichtungen zur Aufnahme von Linsengläsern unterschiedlicher Größe zumindest teilweise unterscheiden. Die Glashaltevorrichtungen des Glashaltersatzes können hierbei eine beliebige Kombination der für die erfindungsgemäßen Glashaltevorrichtungen offenbarten Merkmale aufweisen. Aufgrund der übereinstimmenden Rahmen für die Aufnahme von Linsengläsern mit unterschiedlichen Größen ist es möglich einen einfach zu handhabenden, breit anwendbaren Glashaltersatz bereitzustellen, und somit die Effizienz einer Tauchlackbeschichtung zu erhöhen. Insbesondere können unterschiedliche Linsengläser mittels des übereinstimmenden Rahmens sehr zuverlässig teil- oder vollautomatisiert maschinell prozessiert, insbesondere beschichtet und geprüft werden.

Ein weiterer Aspekt der vorliegenden Erfindung betrifft ein Verfahren zum Tauchlackbeschichten eines Linsenglases in einem Tauchlackbad mittels einer erfindungsgemäßen Glashaltevorrichtung, wobei das Linsenglas während eines Austauchens aus dem Tauchlackbad von der Glashaltevorrichtung derart senkrecht gehalten wird, dass das Linsenglas mit einem unteren Haltepunkt, an dem das Linsenglas vom dritten Glasrandhalteelement gehalten wird, zuletzt aus dem Tauchbad auftaucht. Die Glashaltevorrichtung kann hierbei eine beliebige Kombination der für die erfindungsgemäßen Glashaltevorrichtungen offenbarten Merkmale aufweisen. Durch ein solches senkrechtes Halten des Linsenglases wird ein optimales Ablaufen der Tauchlacklösung von dem Linsenglas ermöglicht, wobei die Bildung von Lackfließspuren, Lackwulsten und weiteren Lackschichtdefekten vermieden wird.

In einer weiteren Ausführungsform wird das Linsenglas während des Austauchens aus dem Tauchlackbad von der Glashaltevorrichtung derart senkrecht gehalten, dass sich ein erster und ein zweiter seitlicher Haltepunkt, an dem das Linsenglas vom ersten beziehungsweise zweiten Glasrandhalteelement gehalten wird, jeweils in einer Höhe im Bereich des etwa 0,4 bis 0,6-fachen, vorzugsweise im Bereich des etwa 0,45 bis 0,55-fachen eines Durchmessers des Linsenglases oberhalb des unteren Haltepunktes befinden. Dadurch wird ein besonders guter Halt des Linsenglases in der Glashaltevorrichtung gewährleistet.

In einer weiteren Ausführungsform wird die Glashaltevorrichtung während eines Tauchvorgangs magnetisch an einer Montageschiene einer Tauchlackbeschichtungsanlage gehalten. Hierdurch wird eine effiziente Nutzung des zur Verfügung stehenden Platzes auf der Montageschiene für Glashaltevorrichtungen gewährleistet.

In einer weiteren Ausführungsform umfasst das Verfahren ferner ein maschinelles Auslesen einer am Rahmen der Glashaltevorrichtung vorgesehenen Codierungseinrichtung, zum Identifizieren der Glashaltevorrichtung und/oder des Linsenglases.

In einer weiteren Ausführungsform umfasst das Verfahren ein optisches Überprüfen einer Beschichtung des Linsenglases, während das Linsenglas von der Glashaltevorrichtung gehalten ist und nachdem es aus dem Tauchbad ausgetaucht wurde. Der teilweise bzw. komplett umlaufende Rahmen ermöglicht eine einfache Handhabung des Linsenglases nach dem Austauchen aus dem Tauchlackbad, ohne dass ein Ausspannen des Linsenglases aus der Glashaltevorrichtung notwendig ist. Hierdurch werden potentielle Lackschichtdfekte, die durch eine direkte Handhabung des Linsenglases entstehen können, vermieden. Ferner erlaubt der zumindest teilweise umlaufende Aufbau der Glashaltevorrichtung ein optisches Überprüfen des Linsenglases, ohne dass Teile der Glashaltevorrichtung optische Pfade durch das Linsenglas verdecken. Damit ist es möglich, das Linsenglas einer vollständigen optischen Kontrolle zu unterziehen, ohne dass das Linsenglas aus der Glashaltevorrichtung ausgespannt werden muss.

Eine weitere Ausführungsform betrifft ein erfindungsgemäßes Verfahren zum Tauchlackbeschichten einer Vielzahl von insbesondere unterschiedlich großen Linsengläsern, mittels einer Vielzahl an erfindungsgemäßen Glashaltevorrichtungen eines erfindungsgemäßen Glashaltersatzes, wobei während des Austauchens aus dem Tauchlackbad die unteren Haltepunkte, an denen die Linsengläser vom jeweiligen dritten Glasrandhalteelement gehalten werden, simultan aus dem Tauchbad austauchen. Durch einen Abriß der Tauchlacklösung von jeweils dem unteren Haltepunkt eines Linsenglases der Vielzahl von Linsengläsern entstehen Wellen auf der Oberfläche der Tauchlacklösung, die sich ausbreiten und bei benachbarten Linsengläsern, die noch nicht vollständig ausgetaucht sind, zu Lackschichtdefekten führen können. Durch ein simultanes Austauchen der unteren Haltepunkte der Vielzahl von Linsengläsern wird die Bildung solcher Lackschichtdefekte verhindert oder reduziert.

Die vorliegende Erfindung wird nachfolgend anhand von beispielhaften bevorzugten Ausführungsformen mit Bezug auf die begleitenden Zeichnungen beschrieben. Dabei zeigen:
- Figur 1:: Figur 1 zeigt einen herkömmlichen Glashalter zum Halten eines Linsenglases.
- Figur 2:: Figur 2 zeigt eine beispielhafte Ausführungsform einer erfindungsgemäßen Glashaltevorrichtung.
- Figur3:: Figur 3 zeigt eine Seitenansicht einer erfindungsgemäßen Glashaltevorrichtung und insbesondere das erste/zweite Glasrandhalteelement und das dritte Glasrandhalteelement.
- Figur 4:: Figur 4 zeigt eine perspektivische Ansicht einer erfindungsgemäßen Glashaltevorrichtung.
- Figur 5:: Figur 5 zeigt eine weitere Ausführungsform einer erfindungsgemäßen Glashaltevorrichtung.

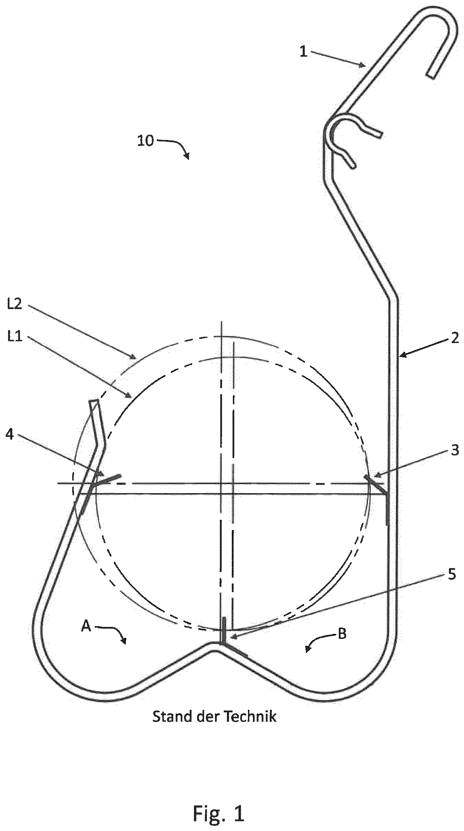

**Figur 1** zeigt ein Beispiel eines herkömmlichen Glashalters 10 zum Halten eines Linsenglases. Der Glashalter 10 umfasst ein Befestigungselement 1 zum Befestigen des Glashalters 10 während eines Tauchlackprozesses. Der Glashalter 10 umfasst ferner einen Rahmen 2, der nicht geschlossen ausgebildet ist. An dem Rahmen 2 sind ein erstes, zweites und drittes Halteelement 3, 4, 5 angeordnet, um ein Linsenglas L1, L2 in dem Glashalter 10 zu halten.

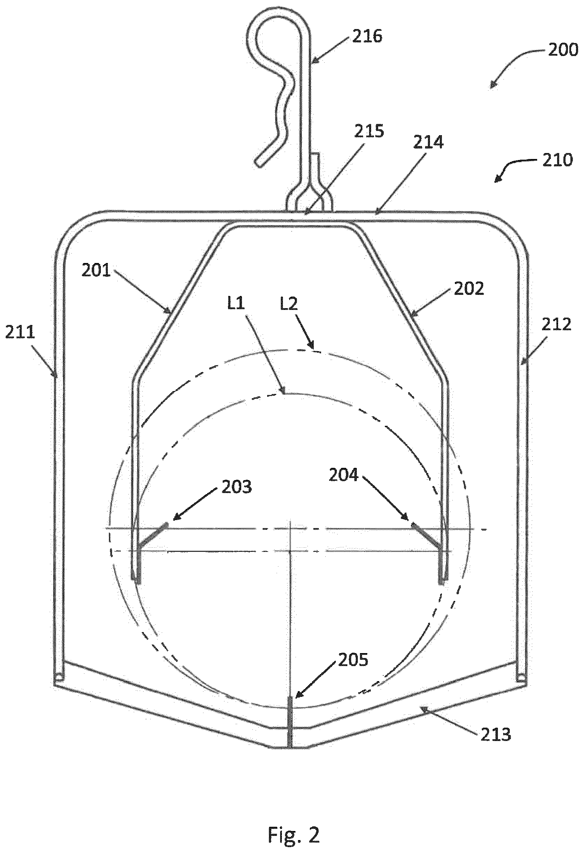

**Figur 2** zeigt eine beispielhafte Ausführungsform einer erfindungsgemäßen Glashaltevorrichtung 200. In dieser Ausführungsform umfasst die Glashaltevorrichtung 200 einen Rahmen 210, der in sich geschlossen ausgebildet ist und daher eine erhöhte Stabilität gegenüber Schwingungen des Rahmens 210 beispielsweise während eines Tauchlackprozesses aufweist. Dies begünstigt eine homogene Lackbeschichtung. Der Rahmen 210 umfasst einen ersten seitlichen Rahmenabschnitt 211 und einen zweiten seitlichen Rahmenabschnitt 212, die über einen oberen Rahmenabschnitt 214 und einen unteren Rahmenabschnitt 213 miteinander verbunden sind.

Der untere Rahmenabschnitt 213 ist in dieser Ausführungsform flächig ausgebildet. Hierdurch wird aufgrund einer Oberflächenspannung einer Tauchlacklösung ein homogenes Abfließen der Tauchlacklösung von einem in die Glashaltevorrichtung 200 eingesetzten Linsenglas L1, L2 während eines Austauchens des Linsenglases L1, L2 unterstützt. Das homogene Abfließen ermöglicht eine Bildung einer homogenen Lackschicht auf dem Linsenglas L1, L2.

Die Glashaltevorrichtung 200 umfasst weiter eine erste elastische Glashalteeinrichtung 201 und eine zweite elastische Glashalteeinrichtung 202, welche in einem Befestigungsabschnitt 215 eines oberen Rahmenabschnitts 214 an dem Rahmen 210 angeordnet sind. In der beispielhaften Glashaltevorrichtung 200 sind die erste und die zweite Glashalteeinrichtung 201, 202 einstückig aus einem durchgehenden Bauteil ausgebildet. An der ersten Glashalteeinrichtung 201 ist ein erstes Glasrandhalteelement 203 angeordnet, welches ausgebildet ist, den Rand des Linsenglases L1, L2 zu halten. An der zweiten Glashalteeinrichtung 202 ist ein zweites Glasrandhalteelement 204 angeordnet, welches ausgebildet ist, den Rand des Linsenglases L1, L2 im Wesentlichen gegenüber des ersten Glasrandhalteelements 203 zu halten.

Ferner ist ein drittes Glasrandhalteelement 205 an dem unteren Rahmenabschnitt 213 angeordnet, welches ausgebildet ist, das Linsenglas L1, L2 an einem untersten Punkt eines Randes des Linsenglases L1, L2 zu halten. Hierdurch wird gewährleistet, dass potentielle Lackwülste, die sich während des Austauchens an dem untersten Punkt bilden könnten, über das dritte Glasrandhalteelement 205 abfließen können. Durch eine solche Anordnung ist es möglich, wahlweise Linsengläser L1, L2 mit unterschiedlichen Durchmessern in der gleichen Glashaltevorrichtung 200 einzuspannen, ohne dass sich hierdurch eine Veränderung der Rahmengröße ergibt und wobei der unterste Punkt des Linsenglases L1, L2 im Wesentlichen durch das dritte Glasrandhalteelement 205 gehalten wird.

Insbesondere ist die Glashaltevorrichtung derart ausgebildet, dass ein darin eingesetztes Linsenglas L1, L2 vollständig in ein Tauchlackbad eingetaucht werden kann, während der obere Rahmenabschnitt 214, insbesondere der Befestigungsabschnitt 215 und obere Enden der Glashalteeinrichtungen 201, 202 außerhalb des Tauchlackbades bleiben können. Damit kann die Ausbildung einer unerwünschten Lackhaut beim Austauchen verhindert werden, welche bei herkömmlichen Glashaltern 10 gemäß Fig. 1 auftreten kann.

Wie in im Vergleich zur vorliegenden Erfindung beispielsweise in Fig. 1 erkennbar ist, wird durch das gehaltene Linsenglas L1, L2, den Rahmen 2 und die Halteelemente 4, 5 eine umschlossene Fläche A definiert. Eine zweite umschlossene Fläche B wird durch das gehaltene Linsenglas L1, L2, den Rahmen 2 und die Halteelemente 3, 5 definiert. Beide Flächen werden beim Eintauchen des Linsenglases in das Tauchlackbad vollständig untergetaucht. Damit machen diese Flächen den Glashalter 10 anfällig für die Bildung von Lackfilmen, welche die Flächen A, B bedecken. Diese Lackfilme entstehen während eines Austauchens des Glashalters 10 aus einer Tauchlacklösung. Hierbei benetzt die Tauchlacklösung die Flächen A und B, wodurch ein dünner flüssiger Lackfilm entsteht, auch Webbing genannt. Die flüssige Tauchlacklösung des Lackfilms fließt weiterhin von den benetzten Flächen A, B ab, bis der Lackfilm instabil wird und reißt. Dies kann zu Spritzern der Tauchlacklösung führen, die auf anderen Linsengläsern L1, L2 in benachbarten Glashaltern 10 zu Lackschichtdefekten führen können. Zusätzlich können durch das plötzliche Abreißen der Lackfilme Wellen auf der Tauchlacklösung erzeugt werden, welche ebenfalls Lackschichtdefekte auf benachbarten Linsengläsern hervorrufen können.

In der beispielhaften Ausführungsform von Fig. 2 sind die erste und zweite Glashalteeinrichtung 201, 202 ferner derart ausgebildet, dass eine elastische Verformung hin zu einem Zustand mit einem größeren gegenseitigen Abstand des ersten und zweiten Glasrandhalteelements 203, 204 zu einem größeren Abstand des dritten Glasrandhalteelements 205 von einer Verbindungsgeraden zwischen dem ersten und zweiten Glasrandhalteelement 203, 204 bzw. einer Verbindungsgeraden zwischen den seitlichen Haltepunkten führt. Dies wird in der dargestellten Ausführungsform insbesondere dadurch erreicht, dass die seitlichen Glashalteeinrichtungen 201, 202 nur in einem zentralen Bereich, der schmäler ist als der gegenseitige Abstand des ersten und zweiten Glasrandhalteelements im entspannten Zustand (also ohne ein eingespanntes Linsenglas), mit dem oberen Rahmenabschnitt verbunden und damit im Wesentlichen starr sind, während sie sich ansonsten elastisch verformen können. Damit wird erreicht, dass für rohrunde Linsengläser (mit kreisförmigem Umfang) selbst bei unterschiedlichen Glasgrößen die seitlichen Haltepunkte relativ gut im Bereich der Höhe des Glasmittelpunktes positionierbar sind. Hierdurch wird ein sicherer Halt des Linsenglases L1, L2 in der Glashaltevorrichtung 200 und eine optimale Verteilung der Glasrandhalteelemente 203, 204, 205 zum homogenen Abfließen der Tauchlacklösung von dem Linsenglas L1, L2 gewährleistet.

Die Glashaltevorrichtung 200 umfasst ferner eine Befestigungseinrichtung 216 zum Befestigen der Glashaltevorrichtung 200 an einer Montageschiene einer Tauchlackbeschichtungsanlage.

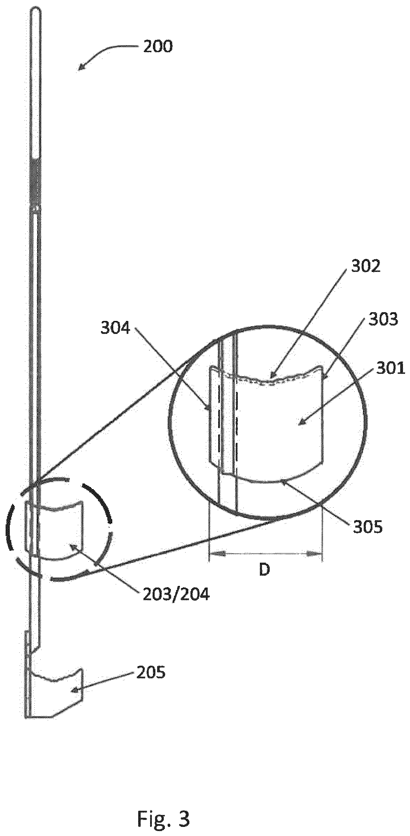

**Figur 3** zeigt eine Seitenansicht der Glashaltevorrichtung 200, und insbesondere das erste/zweite Glasrandhalteelement 203/204 und das dritte Glasrandhalteelement 205. Das erste/zweite Glasrandhalteelement 203/204 ist hierbei flächig mit Breite D ausgebildet und weist eine Querfläche 301 auf, die aufgrund einer Oberflächenspannung der Tauchlacklösung ein homogenes Abfließen der Tauchlacklösung von einem Linsenglas über das erste/zweite Glasrandhalteelement 203/204 während eines Auftauchens ermöglicht. Das erste/zweite Glasrandhalteelement 203/204 weist ferner eine V-förmige Aussparung 302 auf, welche ausgebildet ist, den Rand eines Linsenglases zu halten und das Linsenglas in dem ersten/zweiten Glasrandhalteelement 203/204 zu zentrieren. Die V-förmige Aussparung ist hierbei zusätzlich stufenartig ausgebildet, um einen sicheren Halt des Linsenglases zu gewährleisten und ein Verrutschen des Linsenglases in der Glashaltevorrichtung 200 zu verhindern.

Seiten 303 und 304 des ersten/zweiten Glasrandhalteelements 203/204 verlaufen parallel zu einer Austauchrichtung des Linsenglases aus dem Tauchlackbad, um die Bildung von Oberflächenwellen auf dem Tauchlackbad zu verhindern. Die gerundete Seite 305 ist dabei ausgebildet, ein abruptes Austauchen des ersten/zweiten Glasrandhalteelements 203/204 zu vermeiden, wobei zusätzliche Oberflächenwellen entstehen könnten. Stattdessen ermöglicht die gerundete Seite 305 ein allmähliches Austauchen des ersten/zweiten Glasrandhalteelements 203/204.

Ferner verdeutlicht Figur 3, dass alle Bestandteile der Glashaltevorrichtung 200 im Wesentlichen auf einer Seite einer Ebene, die durch den Rahmen 210 aufgespannt wird, angeordnet sind. Dies ermöglicht es, bei einer eventuellen Verformung der Glashaltevorrichtung eine einfache Ausrichtung der Verformten Bestandteile vorzunehmen indem die Glashaltevorrichtung 200 beispielsweise auf eine ebene Fläche gedrückt wird.

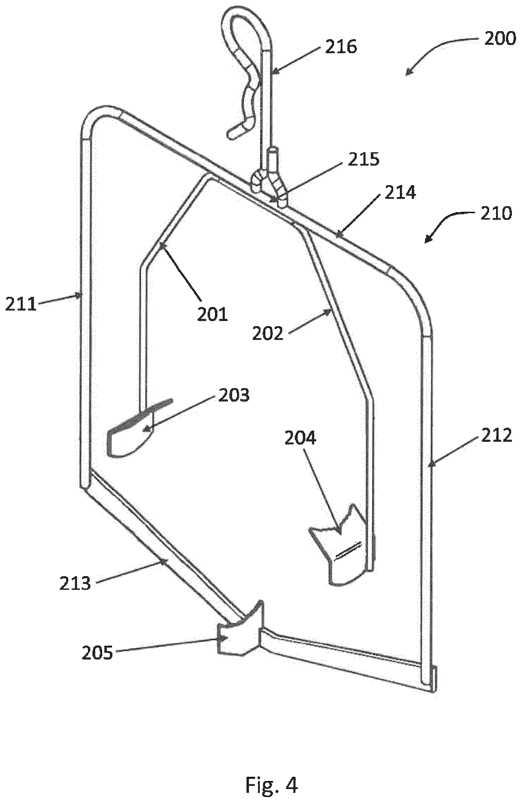

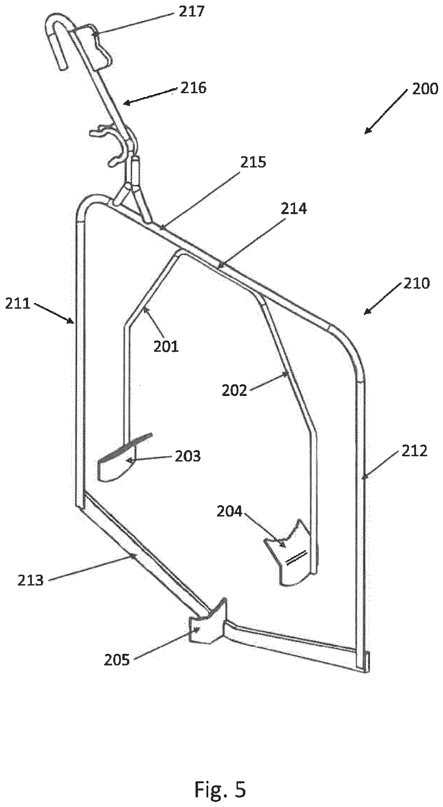

**Figur 4** zeigt eine perspektivische Ansicht der Glashaltevorrichtung 200. **Figur 5** zeigt eine weitere Ausführungsform einer erfindungsgemäßen Glashaltevorrichtung 200, welche sich von Glashaltevorrichtung 200 aus Figur 4 durch eine veränderte Anordnung der Befestigungseinrichtung 216 unterscheidet. Insbesondere ist die Befestigungseinrichtung 216 seitlich an dem oberen Rahmenabschnitt 215 angeordnet. Ferner umfasst die Befestigungseinrichtung 216 eine Codierungseinrichtung 217 zum maschinenlesbaren Identifizieren der Glashaltevorrichtung im Form einer mechanisch und/oder optisch und/oder elektrisch und/oder elektromagnetisch lesbaren Markierung. Damit kann die Glashaltevorrichtung 200 sehr einfach automatisch erkannt werden.

Die vorliegende Erfindung und ihre Aspekt sind nicht auf die oben genannten Kombinationen von Merkmale beschränkt. Vielmehr kann der Fachmann nach seinem Ermessen eine beliebige Kombination der offenbarten Merkmale der Aspekte, Ausführungsformen und Figuren mit den damit verbundenen technischen Vorteilen vornehmen.

### Bezugszeichenliste

- 10: Glashalter
- **1**: Befestigungselement
- **2**: Rahmen
- **3**: erstes Halteelement
- **4**: zweites Halteelement
- **5**: drittes Halteelement
- **L1, L2**: Linsenglas
- **A**: erste umschlossene Fläche
- **B**: zweite umschlossene Fläche
- **200**: Glashaltevorrichtung
- **201**: erste Glashalteeinrichtung
- **202**: zweite Glashalteeinrichtung
- **203**: erstes Glasrandhalteelement
- **204**: zweites Glasrandhalteelement
- **205**: drittes Glasrandhalteelement
- **210**: Rahmen
- **211**: erster seitlicher Rahmenabschnitt
- **212**: zweiter seitlicher Rahmenabschnitt
- **213**: unterer Rahmenabschnitt
- **214**: oberer Rahmenabschnitt
- **215**: Befestigungsabschnitt
- **216**: Befestigungseinrichtung
- **217**: Codierungseinrichtung
- **D**: Breite
- **301**: Querfläche
- **302**: V-förmige Aussparung
- **303, 304**: Seiten
- **305**: gerundete Seite

## Patentansprüche

1. Glashaltevorrichtung (200) zum Halten eines Linsenglases (L1, L2) an dessen Rand, während einer Tauchlackbeschichtung in einem Tauchlackbad, umfassend:
- eine erste elastische Glashalteeinrichtung (201) mit einem ersten Glasrandhalteelement (203), zu einem Halten des Linsenglases (L1, L2) an einem Rand des Linsenglases (L1, L2), an einer ersten Randseite, während der Tauchlackbeschichtung,
- eine zweite elastische Glashalteeinrichtung (202) mit einem zweiten Glasrandhalteelement (204), zum Halten des Linsenglases (L1, L2) an dem Rand des Linsenglases (L1, L2), an einer zweiten Randseite, während der Tauchlackbeschichtung; und
- einen zumindest teilweise umlaufenden Rahmen (210), mit einem dritten Glasrandhalteelement (205), zum Halten des Linsenglases (L1, L2) an dem Rand des Linsenglases (L1, L2), an einer dritten Randseite, während der Tauchlackbeschichtung, wobei die erste Randseite und die zweite Randseite jeweils an einer linken Seite beziehungsweise an einer rechten Seite des Randes des Linsenglases (L1, L2) angeordnet sind und die dritte Randseite an einer unteren Seite des Randes des Linsenglases (L1, L2) angeordnet ist, **dadurch gekennzeichnet, dass** der zumindest teilweise umlaufende Rahmen (210) einen ersten und einen zweiten seitlichen Rahmenabschnitt (211, 212) derart aufweist, dass dadurch jeweils vom ersten beziehungsweise zweiten Glasrandhalteelement (203, 204) bei einem Anheben der Glashaltevorrichtung (200) aus dem Tauchlackbad an der Oberfläche des Tauchlackbades verursachte Wellen gedämpft werden, indem ein erster Abstand zwischen dem ersten Glasrandhalteelement (203) und dem ersten seitlichen Rahmenabschnitt (211) und ein zweiter Abstand zwischen dem zweiten Glasrandhalteelement (204) und dem zweiten seitlichen Rahmenabschnitt (212) nicht mehr als 22 mm betragen.

2. Glashaltevorrichtung (200) nach Anspruch 1, wobei die erste und zweite elastische Glashalteeinrichtung (201, 202) gemeinsam dazu ausgelegt sind, Linsengläser unterschiedlicher Größe zu halten, während der zumindest teilweise umlaufende Rahmen (210) bei einer Montage von Linsengläsern unterschiedlicher Größe unverändert bleibt.

3. Glashaltevorrichtung (200) nach einem der vorangegangenen Ansprüche, wobei ein erster Abstand zwischen dem ersten Glasrandhalteelement (203) und dem ersten seitlichen Rahmenabschnitt (211) und/oder ein zweiter Abstand zwischen dem zweiten Glasrandhalteelement (204) und dem zweiten seitlichen Rahmenabschnitt (212) nicht mehr als etwa 10mm, bevorzugt nicht mehr als etwa 5mm, am meisten bevorzugt nicht mehr als etwa 2mm beträgt.

4. Glashaltevorrichtung (200) nach einem der vorangegangenen Ansprüche, wobei die erste und zweite elastische Glashalteeinrichtung (201, 202) jeweils an einem oberen Rahmenabschnitt (214) des Rahmens (210) befestigt sind.

5. Glashaltevorrichtung (200) nach einem der vorangegangenen Ansprüche, wobei die erste und zweite elastische Glashalteeinrichtung (201, 202) jeweils derart in einem entsprechenden Befestigungsabschnitt (215) am Rahmen (210) befestigt sind, dass die Glashaltevorrichtung (200) dazu eingerichtet ist, ein von der Glashaltevorrichtung (200) gehaltenes Linsenglas (L1, L2) derart vollständig in ein Tauchbad einzutauchen, dass der Befestigungsabschnitt (215) außerhalb des Tauchbades verbleibt.

6. Glashaltevorrichtung (200) nach einem der vorangegangenen Ansprüche, wobei das erste und zweite Glasrandhalteelement (203, 204), insbesondere die erste und zweite elastische Glashalteeinrichtung (201, 202), und/oder der erste und zweite seitliche Rahmenabschnitt (211, 212) symmetrisch bezüglich einer Vertikalebene der Glashaltevorrichtung (200) angeordnet sind, und/oder wobei der erste und zweite seitliche Rahmenabschnitt (211, 212) über einen oberen Rahmenabschnitt (214) und einen unteren Rahmenabschnitt (213) miteinander verbunden sind und/oder wobei der Rahmen das Linsenglas parallel zu einer Ebene umläuft, die durch den Rand des Linsenglases definiert ist.

7. Glashaltevorrichtung (200) nach einem der vorangegangenen Ansprüche, wobei der Rahmen (210) eine Rahmenebene aufspannt, wobei sich das erste, das zweite und das dritte Glasrandhalteelement (203, 204, 205) vorwiegend in einer Richtung aus der Rahmenebene heraus erstrecken.

8. Glashaltevorrichtung (200) nach einem der vorangegangenen Ansprüche, wobei der Rahmen (210) eine Befestigungseinrichtung (216) zum magnetischen Befestigen der Glashaltevorrichtung (200) in einer Tauchlackbeschichtungsanlage zum Ein- und Austauchen der Glashaltevorrichtung (200) während der Tauchlackbeschichtung umfasst.

9. Glashaltevorrichtung (200) nach einem der vorangegangenen Ansprüche, welche außerdem eine Codiereinrichtung zum maschinenlesbaren Identifizieren der Glashaltevorrichtung (200), insbesondere in Form einer mechanisch und/oder optisch und/oder elektrisch und/oder elektromagnetisch lesbaren Markierung, umfasst.

10. Glashaltevorrichtung (200) nach einem der vorangegangenen Ansprüche, wobei das erste, zweite und dritte Glasrandhalteelement (203, 204, 205) mit einer Breite (D) von zumindest etwa 10mm, vorzugsweise zumindest etwa 13 mm und einer Höhe im Bereich von etwa 7 mm bis 15 mm, vorzugsweise im Bereich von etwa 10 mm bis 12 mm, flächig ausbildet sind.

11. Glashaltersatz mit einer Vielzahl von Glashaltevorrichtungen (200) gemäß einem der vorangegangenen Ansprüche, wobei die Rahmen (210) der Vielzahl von Glashaltevorrichtungen (200) des Glashaltersatzes übereinstimmen, während sich die ersten und zweiten elastischen Glashalteeinrichtungen (201, 202) der Vielzahl von Glashaltevorrichtungen (200), zur Aufnahme von Linsengläsern unterschiedlicher Größe, zumindest teilweise unterscheiden.

12. Verfahren zum Tauchlackbeschichten eines Linsenglases (L1, L2) in einem Tauchlackbad mittels einer Glashaltevorrichtung (200) nach einem der Ansprüche 1 bis 10, wobei das Linsenglas (L1, L2) während eines Austauchens aus dem Tauchlackbad von der Glashaltevorrichtung (200) derart senkrecht gehalten wird, dass das Linsenglas (L1, L2) mit einem unteren Haltepunkt, an dem das Linsenglas (L1, L2) vom dritten Glasrandhalteelement (205) gehalten wird, zuletzt aus dem Tauchbad auftaucht.

13. Verfahren nach Anspruch 12, wobei das Linsenglas (L1, L2) während des Austauchens aus dem Tauchlackbad von der Glashaltevorrichtung (200) derart senkrecht gehalten wird, dass sich ein erster und einer zweiter seitlicher Haltepunkt, an dem das Linsenglas (L1, L2) vom ersten beziehungsweise zweiten Glasrandhalteelement (203, 204) gehalten wird, jeweils in einer Höhe im Bereich des etwa 0,4 bis 0,6-fachen, vorzugsweise im Bereich des etwa 0,45 bis 0,55-fachen eines Durchmessers des Linsenglases (L1, L2) oberhalb des unteren Haltepunktes befinden.

14. Verfahren nach einem der Ansprüche 12 bis 13, umfassend ein optisches Überprüfen einer Beschichtung des Linsenglases (L1, L2), während das Linsenglas (L1, L2) von der Glashaltevorrichtung (200) gehalten ist.

15. Verfahren nach einem der Ansprüche 12 bis 14 zum Tauchlackbeschichten einer Vielzahl von insbesondere unterschiedlich großen Linsengläsern, mittels einer Vielzahl an Glashaltevorrichtungen (200) eines Glashaltersatzes gemäß Anspruch 11, wobei während des Austauchens aus dem Tauchlackbad die unteren Haltepunkte, an denen die Linsengläser vom jeweiligen dritten Glasrandhalteelement (205) gehalten werden, simultan aus dem Tauchbad austauchen.

## Claims

1. A glass holding device (200) for holding a lens glass (L1 , L2) at an edge thereof during dip coating in a dip coating bath, comprising:
- a first elastic glass holding device (201) having a first glass edge holding member (203), for holding the lens glass (L1 , L2) at an edge of the lens glass (L1 , L2), at a first edge side, during dip coating,
- a second resilient glass holding means (202) having a second glass edge holding member (204), for holding the lens glass (L1 , L2) at the edge of the lens glass (L1 , L2), at a second edge side, during dip coating; and
- an at least partially circumferential frame (210), having a third lens edge holding member (205), for holding the lens glass (L1 , L2) at the edge of the lens glass (L1 , L2), at a third edge side, during dip coating, wherein the first edge side and the second edge side are respectively arranged at a left side and at a right side of the edge of the lens glass (L1 , L2), and the third edge side is arranged at a lower side of the edge of the lens glass (L1 , L2), **characterized in that** the at least partially circumferential frame (210) has first and second lateral frame portions (211, 212) in such a manner that waves caused by the first and second glass edge holding members (203, 204), respectively, when the glass holding device (200) is lifted out of the dipping varnish bath at the surface of the dipping varnish bath are thereby damped **in that** a first distance between the first glass edge holding member (203) and the first lateral frame portion (211) and a second distance between the second glass edge holding member (204) and the second lateral frame portion (212) are not more than 22 mm.

2. The glass holding device (200) according to claim 1, wherein said first and second elastic glass holding means (201 , 202) are jointly adapted to hold lens glasses of different sizes, while said at least partially circumferential frame (210) remains unchanged when lens glasses of different sizes are mounted.

3. The glass holding device (200) according to any one of the preceding claims, wherein a first distance between the first lens edge holding member (203) and the first lateral frame portion (211) and/or a second distance between the second lens edge holding member (204) and the second lateral frame portion (212) is not more than about 10mm, preferably not more than about 5mm, most preferably not more than about 2mm.

4. The glass holding device (200) according to any one of the preceding claims, wherein the first and second elastic glass holding means (201 , 202) are each attached to an upper frame portion (214) of the frame (210).

5. The glass holding device (200) according to any one of the preceding claims, wherein the first and second resilient glass holding means (201 , 202) are each mounted in a respective mounting portion (215) on the frame (210) such that the glass holding device (200) is adapted to completely immerse a lens glass (L1 , L2) held by the glass holding device (200) in an immersion bath such that the mounting portion (215) remains outside the immersion bath.

6. The glass holding device (200) according to any one of the preceding claims, wherein the first and second glass edge holding members (203, 204), in particular the first and second elastic glass holding means (201 , 202), and/or the first and second lateral frame portions (211 , 212) are arranged symmetrically with respect to a vertical plane of the glass holding device (200), and/or wherein the first and second lateral frame portions (211, 212) are connected to each other via an upper frame portion (214) and a lower frame portion (213), and/or wherein the frame surrounds the lens glass parallel to a plane defined by the edge of the lens glass.

7. The glass holding device (200) according to any one of the preceding claims, wherein the frame (210) spans a frame plane, wherein the first, the second and the third glass edge holding members (203, 204, 205) extend predominantly in a direction out of the frame plane.

8. The glass holding device (200) according to any one of the preceding claims, wherein the frame (210) comprises mounting means (216) for magnetically mounting the glass holding device (200) in a dip coating apparatus for dipping and un-dipping the glass holding device (200) during dip coating.

9. The glass holding device (200) according to any one of the preceding claims, which further comprises a coding device for machine-readable identification of the glass holding device (200), in particular in the form of a mechanically and/or optically and/or electrically and/or electromagnetically readable marking.

10. The glass holding device (200) according to any one of the preceding claims, wherein the first, second and third glass edge holding elements (203, 204, 205) are formed flat with a width (D) of at least about 10 mm, preferably at least about 13 mm, and a height in the range from about 7 mm to 15 mm, preferably in the range from about 10 mm to 12 mm.

11. A glass holder set comprising a plurality of glass holding devices (200) according to any one of the preceding claims, wherein the frames (210) of the plurality of glass holding devices (200) of the glass holder set coincide, while the first and second elastic glass holding devices (201 , 202) of the plurality of glass holding devices (200), for receiving lens glasses.

12. A method for dip coating a lens glass (L1 , L2) in a dip coating bath by means of a glass holding device (200) according to any one of claims 1 to 10, wherein the lens glass (L1 , L2) is held vertically by the glass holding device (200) during an emergence from the dip coating bath in such a way that the lens glass (L1 , L2) emerges last from the dip coating bath with a lower holding point at which the lens glass (L1 , L2) is held by the third glass edge holding element (205).

13. The method according to claim 12, wherein the lens glass (L1 , L2) is held vertically by the glass holding device (200) during the emergence from the dip coating bath such that a first and a second lateral holding point at which the lens glass (L1 , L2) are held by the first and second glass edge holding elements (203, 204), respectively, are each located at a height in the range of about 0.4 to 0.6 times, preferably in the range of about 0.45 to 0.55 times, a diameter of the lens glass (L1, L2) above the lower holding point.

14. The method according to any one of claims 12 to 13, comprising optically verifying a coating of the lens glass (L1 , L2) while the lens glass (L1 , L2) is held by the glass holding device (200).

15. The method according to any one of claims 12 to 14 for dip coating a plurality of lens glasses, in particular of different sizes, by means of a plurality of glass holding devices (200) of a glass holding set according to claim 11, wherein during the emergence from the dip coating bath the lower holding points at which the lens glasses are held by the respective third glass edge holding element (205) emerge simultaneously from the dip coating bath.

## Revendications

1. Dispositif de maintien de verre (200) pour maintenir un verre de lentille (L1 , L2) sur son bord pendant un revêtement de vernis par immersion dans un bain de vernis par immersion, comprenant :
- un premier dispositif de maintien de verre élastique (201) avec un premier élément de maintien de bord de verre (203), pour maintenir le verre de lentille (L1 , L2) sur un bord du verre de lentille (L1 , L2), sur un premier côté de bord, pendant le revêtement de vernis par immersion,
- un deuxième dispositif de maintien de verre élastique (202) avec un deuxième élément de maintien de bord de verre (204), pour maintenir le verre de lentille (L1 , L2) sur le bord du verre de lentille (L1 , L2), sur un deuxième côté de bord, pendant le revêtement de vernis par immersion ; et
- un cadre au moins partiellement périphérique (210), avec un troisième élément de maintien de bord de verre (205), pour maintenir le verre de lentille (L1 , L2) sur le bord du verre de lentille (L1 , L2), sur un troisième côté de bord, pendant le revêtement de vernis par immersion, le premier côté de bord et le deuxième côté de bord étant disposés respectivement sur un côté gauche et sur un côté droit du bord du verre de lentille (L1 , L2), et le troisième côté de bord étant disposé sur un côté inférieur du bord du verre de lentille (L1 , L2), **caractérisé en ce que** le
cadre au moins partiellement périphérique (210) présente une première et une deuxième partie de cadre latérale (211, 212) de telle sorte que les ondes provoquées respectivement par le premier et le deuxième élément de maintien du bord du verre (203, 204) lors d'un soulèvement du dispositif de maintien du verre (200) hors du bain de laque à immersion à la surface du bain de laque à immersion sont ainsi amorties, **en ce qu'**une première distance entre le premier élément de maintien du bord du verre (203) et la première partie de cadre latérale (211) et une deuxième distance entre le deuxième élément de maintien du bord du verre (204) et la deuxième partie de cadre latérale (212) ne sont pas supérieures à 22 mm.

2. Le dispositif de maintien de verre (200) selon la revendication 1, dans lequel les premier et deuxième moyens de maintien de verre élastiques (201 , 202) sont conçus conjointement pour maintenir des verres de lentilles de différentes tailles, tandis que le cadre au moins partiellement périphérique (210) reste inchangé lors d'un montage de verres de lentilles de différentes tailles.

3. Le dispositif de maintien de verre (200) selon l'une quelconque des revendications précédentes, dans lequel une première distance entre le premier élément de maintien de bord de verre (203) et la première partie de cadre latérale (211 ) et/ou une deuxième distance entre le deuxième élément de maintien de bord de verre (204) et la deuxième partie de cadre latérale (212) n'est pas supérieure à environ 10 mm, de préférence pas supérieure à environ 5 mm, le plus préférablement pas supérieure à environ 2 mm.

4. Le dispositif de maintien de verre (200) selon l'une quelconque des revendications précédentes, dans lequel les premier et deuxième moyens élastiques de maintien de verre (201 , 202) sont fixés chacun à une partie de cadre supérieure (214) du cadre (210).

5. Le dispositif de maintien de verre (200) selon l'une quelconque des revendications précédentes, dans lequel les premier et deuxième moyens de maintien de verre élastiques (201 , 202) sont chacun fixés dans une partie de fixation correspondante (215) sur le cadre (210) de telle sorte que le dispositif de maintien de verre (200) est adapté pour immerger complètement dans un bain d'immersion un verre de lentille (L1 , L2) maintenu par le dispositif de maintien de verre (200) de telle sorte que la partie de fixation (215) reste à l'extérieur du bain d'immersion.

6. Le dispositif de maintien de verre (200) selon l'une quelconque des revendications précédentes, dans lequel les premier et deuxième éléments de maintien de bord de verre (203, 204), notamment les premier et deuxième moyens élastiques de maintien de verre (201 , 202), et/ou les première et deuxième portions de cadre latérales (211 , 212) sont disposés symétriquement par rapport à un plan vertical du dispositif de maintien de verre (200), et/ou dans lequel les première et deuxième parties de cadre latérales (211, 212) sont reliées l'une à l'autre par une partie de cadre supérieure (214) et une partie de cadre inférieure (213) et/ou dans lequel le cadre entoure le verre de lentille parallèlement à un plan défini par le bord du verre de lentille.

7. Le dispositif de maintien de verre (200) selon l'une quelconque des revendications précédentes, dans lequel le cadre (210) définit un plan de cadre, les premier, deuxième et troisième éléments de maintien de bord de verre (203, 204, 205) s'étendant principalement dans une direction hors du plan de cadre.

8. Le dispositif de maintien de verre (200) selon l'une quelconque des revendications précédentes, dans lequel le cadre (210) comprend un moyen de fixation (216) pour fixer magnétiquement le dispositif de maintien de verre (200) dans une installation de revêtement par trempage pour immerger et plonger le dispositif de maintien de verre (200) pendant le revêtement par trempage.

9. Le dispositif de maintien de verre (200) selon l'une quelconque des revendications précédentes, qui comprend en outre un dispositif de codage pour identifier le dispositif porte-verre (200) de manière lisible par une machine, notamment sous la forme d'un marquage lisible mécaniquement et/ou optiquement et/ou électriquement et/ou électromagnétiquement.

10. Le dispositif de maintien de verre (200) selon l'une quelconque des revendications précédentes, dans lequel les premier, deuxième et troisième éléments de maintien de bord de verre (203, 204, 205) sont formés à plat avec une largeur (D) d'au moins environ 10 mm, de préférence d'au moins environ 13 mm et une hauteur dans la plage d'environ 7 mm à 15 mm, de préférence dans la plage d'environ 10 mm à 12 mm.

11. Jeu de supports de verre comprenant une pluralité de supports de verre (200) selon l'une quelconque des revendications précédentes, dans lequel les cadres (210) de la pluralité de supports de verre (200) du jeu de supports de verre coïncident, tandis que les premier et deuxième supports de verre élastiques (201 , 202) de la pluralité de supports de verre (200), destinés à recevoir des verres de lentilles de différentes tailles, diffèrent au moins.

12. Procédé de revêtement par trempage d'un verre de lentille (L1 , L2) dans un bain de trempage au moyen d'un dispositif de maintien de verre (200) selon l'une quelconque des revendications 1 à 10, dans lequel le verre de lentille (L1 , L2) est maintenu verticalement par le dispositif de maintien de verre (200) pendant une immersion hors du bain de trempage de telle sorte que le verre de lentille (L1 , L2) émerge en dernier du bain de trempage avec un point de maintien inférieur au niveau duquel le verre de lentille (L1 , L2) est maintenu par le troisième élément de maintien de bord de verre (205).

13. Le procédé selon la revendication 12, dans lequel le verre de lentille (L1 , L2) est maintenu verticalement par le dispositif de maintien du verre (200) pendant la sortie du bain de trempage par immersion de telle sorte qu'un premier et un deuxième points de maintien latéraux, au niveau desquels le verre de lentille (L1 , L2) sont maintenus respectivement par le premier et le deuxième élément de maintien du bord du verre (203, 204), chacun à une hauteur comprise entre environ 0,4 et 0,6 fois, de préférence entre environ 0,45 et 0,55 fois, un diamètre du verre de lentille (L1 , L2) au-dessus du point de maintien inférieur.

14. Le procédé selon l'une quelconque des revendications 12 à 13, comprenant une vérification optique d'un revêtement du verre de la lentille (L1 , L2) alors que le verre de la lentille (L1 , L2) est maintenu par le dispositif de maintien du verre (200).

15. Le procédé selon l'une quelconque des revendications 12 à 14 pour le revêtement par trempage d'une pluralité de verres de lentilles, en particulier de tailles différentes, au moyen d'une pluralité de dispositifs de maintien de verre (200) d'un ensemble de maintien de verre selon la revendication 11 , dans lequel, pendant l'immersion hors du bain de trempage, les points de maintien inférieurs, au niveau desquels les verres de lentilles sont maintenus par le troisième élément de maintien de bord de verre (205) respectif, émergent simultanément du bain d'immersion.
